# EUROPEAN PATENT APPLICATION

(11) **EP 0 686 881 A1**
(43) Date of publication of application: **13.12.1995**
(21) Application number: 95108782.4
(22) Date of filing: 07.06.1995
(51) Int. Cl.: G03G 9/087

(54) **Particulate polymer, electrophotographic toner, and preparation method**

(30) Priority: 08.06.1994 US 255522
(71) Applicant: EASTMAN KODAK COMPANY, Rochester, New York 14650 (US)
(72) Inventor: Sorriero, Louis Joseph, c/o Eastman Kodak Co., Rochester, New York 14650-2201 (US); Tvagi, Dinesh, c/o Eastman Kodak Co., Rochester, New York 14650-2201 (US); Jadwin, Thomas Arthur, c/o Eastman Kodak Co., Rochester, New York 14650-2201 (US); Mourey, Thomas Henry, c/o Eastman Kodak Co., Rochester, New York 14650-2201 (US)
(74) Representative: Brandes, Jürgen, Dr. rer. nat.

(57) **Abstract**

A method for making a polymeric particulate, polymeric electrophotographic toner and the particulate and toner. In the method a reaction mixture is prepared that includes vinyl type monomer, crosslinker, and chain transfer agent. The crosslinker has a concentration greater than 0.4 parts by weight per 100 parts by weight of the monomer. The crosslinker and the chain transfer agent together have a combined concentration of greater than 0.6 parts by weight per hundred parts of the monomer. The reaction mixture is subjected to addition polymerization conditions favoring formation of polymer including a first portion having a molecular weight in excess of 1 x 10⁶ and a second, tetrahydrofuran soluble portion having a molecular weight distribution determined by molecular exclusion chromatography including a first peak centered in the molecular weight range of from 0.8 x 10⁴ to 1 x 10⁵. The polymer is melt processed resulting in a melt product, which is then pulverizing to a volume average particle size of from 5 to 20 micrometers to produce particulate. The particulate includes polymer having a molecular weight distribution determined by molecular exclusion chromatography substantially retaining the first peak and including a second peak in the molecular weight range of from 1 x 10⁵ to 1 x 10⁷.

## Description

The invention relates to particulate polymers suitable for use in electrophotographic toners and developers and to methods for preparing those polymers and toners. The invention more particularly relates to methods for producing polymeric particulates which utilize a reaction including monomer, crosslinker, and chain transfer agent to produce a polymer having a particular molecular weight distribution and a subsequent breakdown to modify that polymer.

In electrophotography, an image comprising a pattern of electrostatic potential (also referred to as an electrostatic latent image), is formed on a surface of an electrophotographic element and is then developed into a toner image by contacting the latent image with an electrographic developer. If desired, the latent image can be transferred to another surface before development. The toner image is eventually transferred to a receiver, to which it is fused, typically by heat and pressure.

Toners contain a binder and other additives, such as colorants. Binders are generally polymeric and are selected so as to provide a balance between various conflicting constraints. For example, the viscosity and elasticity of a toner incorporating the binder must not be so high as to cause problems in transferring and fusing a toner image to a receiver.

Further constraints are imposed by common manufacturing techniques used in preparing toner binders. Electrophotographic toners are commonly made by polymerization of binder followed by mixing with various additives and then grinding to a desired size range. Of primary importance to the grinding procedure is the brittleness of the binder. A suitable range of brittleness depends in part upon the manufacturing equipment to be used.

The amount of grinding required to produce toner can be reduced by the use of "limited coalescence" polymerization techniques to produce polymer as a particulate. US-A-4,912,009 teaches the preparation of a toner incorporating a particulate styrene-acrylate polymer by use of a limited coalescence suspension polymerization followed by melt blending and pulverization. Other limited coalescence techniques are taught in US-A-4,833,060 and US-A-3,502,582.

Among many desired features in a polymeric toner binder, the two most important, but usually compromised, are grindability and fusing off-set latitude. Enhanced grindability of a toner binder implies that the toner can be pulverized at a higher rate, which will lower the toner manufacturing cost. The fusing off-set latitude refers to the range of temperatures between the lowest temperature where the toner does not show cold offset, (or lowest temperature at which toner fuses to the receiver substrate) and the highest temperature where the toner does not exhibit hot offset, (or highest temperature at which toner fuses to receiver without offsetting to the fuser roller).

In general the grindability of a toner binder can be improved by lowering its molecular weight. However, the lowering of the molecular weight also lowers the rheological behavior of the toner binder. More specifically, the ETA*, the complex viscosity of the binder polymer is lowered which indicates reduced melt strength for toner and more propensity to show fusing offset. Increases in molecular weight increase the melt strength, but the toner binder becomes tougher to grind. It is because of these two competing requirements that toner binder properties are often compromised.

One approach to address this problem is to mix a low molecular weight fraction with a high molecular weight fraction. This is taught by US-A-4,973,538; US-A-4,486,524; US-A-4,499,168; and US-A-5,135,833. By controlling the ratio of the two molecular weight fractions, the rheological and grindability of the toner binder can be somewhat controlled. However, this approach does not provide satisfactory results if toners with very high melt elasticity are desired or if the molecular weight difference between the two distributions is very large.

Another problem with this approach has to do with the mixing of the two molecular weight distributions. Unless they molecular weights of the two fractions are close, the melt viscosity differences do not easily yield a homogeneous polymer blend. One way to insure that the polymer blend is homogeneous is to either prepare a solution blend of the molecular weight fractions which then isolated and dried. This adds significant cost to the toner manufacturing. The other often practiced approach is to carry out two separate polymerization and mixing the two resins prior to isolation. This approach does not imply that phase separation of the two molecular weight fractions would not take place during melt processing with colorants, charge controlling agents or other toner additives.

A slight variation to this approach calls for carrying out one polymerization with one monomer composition and then add another monomer compositions to the reactor and carrying out the second polymerization or adding one of the reactants at a rate different than that of the other reactants. This is taught by US-A-4,966,829; US-A-4,039,500; US-A-4,939,060; US-A-4,564,573; US-A-5,164,282; US-A-4,894,309; and US-A-4,628,071. The composition of the two monomer feeds would then correspond to two different molecular weight distributions. A similar approach is taken in US-A-4,626,488, in which the polymerization reaction is varied by reducing the initiator concentration. This approach not only is expensive, it still suffers from the problems associated with phase separation of the two molecular weight distributions due to significant melt viscosity differences encountered during melt processing.

In some previous methods, the number of molecular weight fractions has been increased from two to three or four. This addresses the incompatibility of two different molecular weight fractions, if the added fraction or fractions are between the first two. However, this technique compromises independent control of grindability and melt elasticity or melt viscosity.

Another approach is to rely upon two "competing" reactions. US-A-5,206,319 teaches a toner resin prepared by polymerization of styrene and butadiene in the presence of two different chain transfer agents. US-A-4,481,274 teaches that an optimized toner can be provided by producing a crosslinked vinyl type polymer using a chain transfer agent and then mixing that material with an olefinic polymer. The crosslinked, chain terminated vinyl type polymer is taught as being excessively hard and poor for uniformly dispersing pigments.

The above procedures make available a very broad selection of toners, in that a great many monomers, crosslinkers, and chain transfer agents can be used in a wide range of concentrations to provide a large number of different toner binders. This presents a shortcoming in that it has not been readily apparent how to efficiently sift through the wide variety of available materials to select an optimum binder for a particular set of requirements without very extensive trial and error.

It is therefore highly desirable to provide improved particulate polymers and toners and production methods in which grindability and rheological characteristics can be optimized.

The invention, in its broader aspects, provides a method for making a polymeric particulate, polymeric electrophotographic toner and the particulate and toner. In the method a reaction mixture is prepared that includes vinyl type monomer, crosslinker, and chain transfer agent. The crosslinker has a concentration greater than 0.4 parts by weight per 100 parts by weight of the monomer. The crosslinker and the chain transfer agent together have a combined concentration of greater than 0.6 parts by weight per hundred parts of the monomer. The reaction mixture is subjected to addition polymerization conditions favoring formation of polymer including a first portion having a molecular weight in excess of 1 x 10⁶ and a second, tetrahydrofuran soluble portion having a molecular weight distribution determined by molecular exclusion chromatography including a first peak centered in the molecular weight range of from 0.8 x 10⁴ to 1 x 10⁵. The polymer is melt processed resulting in a melt product, which is then pulverizing to a volume average particle size of from 5 to 20 micrometers to produce particulate. The particulate includes polymer having a molecular weight distribution determined by molecular exclusion chromatography substantially retaining the first peak and including a second peak in the molecular weight range of from 1 x 10⁵ to 1 x 10⁷.

It is an advantageous effect of at least some of the embodiments of the invention that improved particulate polymers and toners and production methods are provided in which grindability and rheological characteristics can be optimized.

The above-mentioned and other features and objects of this invention and the manner of attaining them will become more apparent and the invention itself will be better understood by reference to the following description of an embodiment of the invention taken in conjunction with the accompanying figures wherein:
Figure 1 is a map of isogel lines derived from data obtained in preparations of the styrene-co-butylacrylate-co-divinyl benzene polymer used in the Examples.
Figure 2 is a chromatogram of the molecular weight distribution (MWD) taken by molecular exclusion chromatography for the soluble portion of the crude polymer of Comparative Example A. Peaks at about log 2-3 are artifacts.
Figure 3 is an MWD chromatogram for the soluble portion of the binder of Comparative Example A after low shear melt processing.
Figure 4 is an MWD chromatogram for the soluble portion of the binder of Comparative Example A after high shear melt processing.
Figure 5 is an MWD chromatogram for the soluble portion of the binder of Example 5 after melt processing.
Figure 6 is an MWD chromatogram for the soluble portion of the binder of Example 6 after melt processing.
Figure 7 is an MWD chromatogram for the soluble portion of the binder of Example 7 after melt processing.
Figure 8 is an MWD chromatogram for the soluble portion of the crude polymer of Example 11.
Figure 9 is an MWD chromatogram for the soluble portion of the binder of Example 11 after low shear melt processing.
Figure 10 is an MWD chromatogram for the soluble portion of the binder of Example 11 after high shear melt processing.
Figures 11, 12, 13, and 14 are MWD chromatograms for the soluble portion of the crude polymers of Examples 12, 13, 14, and 15, respectively.
Figures 15, 16, 17, and 18 are MWD chromatograms for the soluble portion of the binder of Examples 12, 13, 14, and 15, respectively, after melt processing.

The term "particle size" used herein, or the term "size", or "sized" as employed herein in reference to the term "particles", means the median volume weighted diameter as measured by conventional diameter measuring devices, such as a Coulter Multisizer, sold by Coulter, Inc. of Hialeah, Florida. Median volume weighted diameter is the diameter of an equivalent weight spherical particle which represents the median for a sample.

The term "charge control" refers to a propensity of a toner addenda to modify the triboelectric charging properties of the resulting toner.

The term "glass transition temperature" or "T_{g}" as used herein means the temperature at which a polymer changes from a glassy state to a rubbery state. This temperature (T_{g}) can be measured by differential thermal analysis as disclosed in "Techniques and Methods of Polymer Evaluation", Vol. 1, Marcel Dekker, Inc., New York, 1966.

The term "fusing temperature," as used herein in relation to toner, means the lowest temperature at which a high density solid area patch developed with this toner, after being run through a fuser nip, folded upward with loose toner brushed off the fold, exhibits a less than 100 micrometer crack width (indicative of good adhesion of toner to paper), measured on a Canon PC type fusing breadboard consisting of a non-oiled hard Teflon fusing roll engaged onto a compliant rubber backup roll at a constant speed and pressure.

The term "fusing temperature latitude" used herein means the temperature range at a constant speed and pressure from the temperature of the onset of fusing to the hot offset temperature.

The term "hot offset temperature" used herein means the temperature at which some of the fused image "offsets" or transfers onto the fusing roll surface as observed by running a blank chase sheet through the fuser immediately after the toner image. The hot offset condition occurs when the interfacial bond strength of the molten toner to the fusing roll exceeds the hot melt cohesive strength of the toner.

In the method of the invention, a polymeric particulate is produced. The particulate can be an electrophotographic toner.

A polymer is first produced by addition reaction, from a reaction mixture containing monomer, crosslinker, and chain transfer agent. This polymer has a soluble portion having a single peak or essentially a single peak by molecular exclusion chromatography centered in the range of from 0.8 x 10⁴ to 1 x 10⁵ and a high molecular weight portion having a molecular weight in excess of 1 x 10⁶. In preferred embodiments of the invention, the high molecular weight portion is insoluble in tetrahydrofuran.

The polymer is next subjected to melt processing in which the polymer is exposed to moderate to high shearing forces and temperatures in excess of the T_{g}, the glass transition temperature of the polymer. The temperature of the polymer melt results, in part, from the frictional forces of the melt processing. If the desired particulate is an electrophotographic toner, then the melt processing includes melt blending of toner addenda into the bulk of the polymer.

The product of the melt blending is pulverized to provide a particulate having a volume average particle size of 5 to 20 micrometers. The pulverizing may include several stages of size reduction. In the particulate, the polymer has a molecular weight distribution determined by molecular exclusion chromatography that includes a first peak centered in the range of from 0.8 x 10⁴ to 1 x 10⁵ and also includes a second peak in the molecular weight range of from 1 x 10⁵ to 1 x 10⁷. Accompanying this new second peak is a corresponding decrease in the size of the high molecular weight portion. The first, soluble peak is substantially undiminished. In a particular embodiment of the invention, these changes in the polymer can be utilized in a series of iterations to produce toner having an optimized combination of good grindability and good rheological characteristics.

The invention is not limited to a particular type of addition polymerization reaction; however, a limited coalescence reaction is preferred over, for example, a solution polymerization. "Limited coalescence" is a relatively broad term that refers to both emulsion and suspension polymerizations. The reaction conditions favor formation of polymer having a molecular weight distribution determined by molecular exclusion chromatography, including a high molecular weight portion and a tetrahydrofuran soluble portion having a first peak centered in the molecular weight range of from 0.8 x 10⁴ to 1 x 10⁵. The conditions preferably favor the formation of polymer in which the high molecular weight portion is insoluble in tetrahydrofuran and the soluble portion has only a single peak. Suitable conditions for emulsion and suspension polymerizations are disclosed herein. Suitable conditions for other reaction types, such as solution polymerizations could be readily determined by extrapolation from this disclosure and minimal trial and error.

In the emulsion polymerization, the reaction mixture has an organic phase that includes the monomer, crosslinker, and chain transfer agent; and an aqueous phase that includes a surfactant and initiator for the addition reaction. The two phases are mixed together and the initiator is activated, typically by heating, and the polymerization occurs resulting in beads of polymer. In a particular embodiment of the invention, a reduction-oxidation type activator is used.

In the suspension polymerization, the organic phase includes monomer, crosslinker, chain transfer agent, and the initiator. The second phase is aqueous. The organic phase is stabilized as domains of a particular size within the aqueous matrix. The size of the domains is determined by a variety of criteria, particularly the choice of materials to be used as stabilizing agents.

In a preferred embodiment of the invention the suspension polymerization procedure follows the procedures disclosed in US-A-4,912,009. The water insoluble reactants: monomer, crosslinker, and chain transfer agent are mixed together and then dispersed into an aqueous medium containing a water-dispersible, but water-insoluble suspending agent.

The suspending agent or stabilizer is a negatively charged, solid colloidal material such as clay or colloidal silica. The suspending agent is used with a water soluble "promoter" that affects the hydrophobic-hydrophilic balance of the solid colloidal particles by forming a complex with the suspending agent. The promoter has both hydrophilic and hydrophobic groups and reduces the hydrophilicity of the suspending agent. As stated in US-A-2,932,629, the promoter drives the particle of the solid colloid to the liquid-liquid interface of the oleophilic monomer droplets and the aqueous phase.

The colloidal particles have dimensions from 1 to 100 nanometers and preferably from 5 to 70 nanometers. The size and concentration of these particles largely controls the size of the polymer particles.

Hydrophilic colloidal silica useful as the suspending agent is available commercially, for example, under the trade names and in the particle sizes as follows: LUDOX TM, 20 nm; LUDOX HS-40, 12 nm; LUDOX SM, 7 nm; and LUDOX AM, 12 nm; all supplied by E. I. du Pont de Nemours Company; and NALCOAG 1060, 60 nm supplied by Nalco Chemical Co.

A material useful as the promoter is a condensation product of 2 to 6 carbon alkyl dicarboxylic acid and an alkanol amine. A current preferred diacid is adipic acid. It is currently preferred that the alkanol groups of the alkanol amine have from 1 to 4 carbons. Particularly preferred are diethanolamine and methyl amino ethanol. With adipic acid, these form polymers that complex with hydrophobic silica and then coat the hydrophilic droplets.

It is also desirable that a water soluble material be added that prevents polymerization in the aqueous phase. Examples of such materials are: sodium nitrate, copper salts, methylene blue, and phenols. A currently preferred material is potassium dichromate.

The free radical initiator is soluble in the mixture of monomer, crosslinker, and chain transfer agent. Examples of such initiators include azo compounds such as 2,2'-azobis(2-methylbutyronitrile), 2,2'-azobis(isobutyronitrile). Commercially available products include: VAZO 67, VAZO 64, and VAZO 52 marketed by du Pont.

In a particular embodiment of the method of the invention, the monomer, crosslinker, chain transfer agent, and initiator are first combined to provide an initial reaction mixture which is then added to an aqueous dispersion of the stabilizing agents. The initial reaction mixture is added to the aqueous mixture with high shearing agitation to a obtain a suspension of monomer droplets. The high shearing forces reduce the size of the monomer droplets. An equilibrium is reached in which the size of the droplets is stabilized or limited by the suspending agent complex which coats the surfaces of the droplets.

The mixture is then heated and stirred in the reaction vessel to polymerize the monomer droplets. The resulting polymer beads are isolated by filtration and can, if desired, be slurried with water to remove water-soluble impurities and free suspending agent complex. No extensive washing or other purification is needed.

The polymer is the polymerization product of vinyl type monomer, crosslinker, and chain transfer agent. The relative concentrations of crosslinker and chain transfer agent can be varied over a considerable range as discussed below; however, there are minimum concentrations of these two ingredients in the particulates of the invention. The crosslinker has a concentration, in the reaction mixture and the polymer produced, greater than 0.4 parts by weight per 100 parts by weight of the monomer. The total concentration of both crosslinker and chain transfer agent is greater than 0.6 parts by weight per hundred parts of said monomer. Unless crosslinker and chain transfer agent are at these concentrations or higher, characteristics of the particulate produced, such as gel concentration, vary widely with small changes in concentration of crosslinker or chain transfer agent or equipment size or conditions. These very narrow tolerances are unacceptable for manufacturing scale processes can destroy or greatly diminish the practical usefulness of such materials. In currently preferred embodiments of the invention, having greater tolerances for concentration inaccuracies, the crosslinker has a concentration of at least 0.6 parts per hundred parts of monomer and the chain transfer agent has a concentration of at least 0.5 parts per hundred parts of monomer.

One or more vinyl type monomers can be used. Although certain monomers are preferred, namely styrene and butyl acrylate, the method of the invention is not limited to those monomers and can utilize other monomers which are capable of addition polymerization and which yield polymers useful as toner binders. Examples of suitable vinyl monomers include styrene, alpha-methylstyrene, para-chlorostyrene, unsubstituted or substituted monocarboxylic acids having a double bond such as acrylic acid, methyl acrylate, ethyl acrylate, butyl acrylate, dodecyl acrylate, octyl acrylate, phenyl acrylate, methacrylic acid, methyl methacrylate, ethyl methacrylate, butyl methacrylate, octyl methacrylate acrylonitrile, methacrylonitrile, and acrylamide; unsubstituted or substituted dicarboxylic acids having a double bond such as maleic acid, butyl maleate, methyl maleate, and dimethyl maleate; vinyl esters such as vinyl chloride, vinyl acetate, and vinyl benzoate; olefins such as ethylene, propylene, and butylene; vinyl ketones such as vinyl methyl ketone and vinyl hexyl ketone; vinyl ethers such as vinyl methyl ether, vinyl ethyl ether, and vinyl isobutyl ether.

In a currently preferred embodiment of the invention, the largest component of the monomer composition is styrene or a styrene homologue such as methyl styrene. It is preferred that the styrene monomer is used in an amount of at least 60 weight percent and more preferably at least 75 weight percent of the monomer composition. The composition also contains at least one alkyl acrylate or methacrylate. Preferably, this is a lower alkyl acrylate or methacrylate, in which the alkyl group contains from 1 to 4 carbon atoms.

The crosslinker contains one or more compounds each having two or more double bonds capable of polymerization. Examples of suitable crosslinkers include: aromatic divinyl compounds such as divinyl benzene, and divinyl naphthalene; carboxylic acid esters having two double bonds such as ethylene glycol diacrylate, ethylene glycol dimethacrylate, and 1,3-butane diol dimethylacrylate; divinyl compounds such as divinyl aniline, divinyl ether, divinyl sulfide, and divinyl sulfone; and compounds having three or more vinyl groups.

The chain transfer agent acts a chain terminator in the polymerization process. Suitable chain transfer agents include: mercaptans such as t-dodecanethiol, laurylmercaptan, and butylmercaptan; and halogenated carbons such as carbon tetrachloride and carbon tetrabromide.

The polymer product of the polymerization has a molecular weight distribution that includes a high molecular weight portion. This portion is preferably insoluble in tetrahydrofuran and similar solvents and has a very high molecular weight due to extensive crosslinking and is commonly referred to as the "gel fraction". The polymer product also includes a low molecular weight portion that is soluble in solvents like tetrahydrofuran. A molecular weight distribution for this portion, determined by molecular exclusion chromatography reveals a peak centered in the molecular weight range of from 0.8 x 10⁴ to 1 x 10⁵. In a preferred embodiment of the invention, there is a single smooth, or slightly shouldered, peak. In a non-preferred embodiment of the invention, the high molecular weight portion represents a tail extending outward from the single peak. In the preferred embodiment of the invention in which the polymer includes a gel fraction, the soluble peak declines to an amplitude of zero at a molecular weight of 1 x 10⁶ and there are no additional peaks in the soluble portion.

The polymer is melt processed in a two roll mill or extruder. This procedure can include melt blending of other materials with the polymer, such as toner addenda. A preformed mechanical blend of particulate polymer particles, colorants and other toner additives can be prepared and then roll milled or extruded. The roll milling, extrusion, or other melt processing is performed at a temperature sufficient to achieve a uniformly blended composition. The resulting material, referred to as a melt product or melt slab is then cooled. For a polymer having a T_{g} in the range of 50°C to 120°C, or a Tₘ in the range of 65°C to 200°C, a melt blending temperature in the range of 90°C to 240°C is suitable using a roll mill or extruder. Melt blending times, that is, the exposure period for melt blending at elevated temperature, are in the range of 1 to 60 minutes.

An optional but preferred component of the toner is colorant: a pigment or dye. Suitable dyes and pigments are disclosed, for example, in US-A-Re-31,072 and in US-A-4,160,644; US-A-4,416,965; US-A-4,414,152; and US-A-2,229,513. One particularly useful colorant for toners to be used in black and white electrostatographic copying machines and printers is carbon black. Colorants are generally employed in the range of from 1 to 30 weight percent on a total toner powder weight basis, and preferably in the range of 2 to 15 weight percent.

Another commonly used additive is a charge control agent. A very wide variety of charge control agents for positive charging toners are available. A large, but lesser number of charge control agents for negative charging toners are also available. Suitable charge control agents are disclosed, for example, in US-A-3,893,935; US-A-4,079,014; US-A-4,323,634 and British Patent Nos. 1,501,065; and 1,420,839. Charge control agents are generally employed in small quantities such as, from 0.1 to 5 weight percent based upon the weight of the toner.

The toner can also contain other additives of the type used in previous toners, including magnetic pigments, leveling agents, surfactants, stabilizers, and the like. The total quantity of such additives can vary. A present preference is to employ not more than 10 weight percent of such additives on a total toner powder composition weight basis. In a particular embodiment of the invention a waxy or olefinic additive is used at a concentration of 0 to 5 weight percent relative to the weight of binder. A negative charging toner utilizing toner of the invention is disclosed in U.S. Patent Application Serial No. 08/253,447, entitled "Humidity-Stabilized Toners and Developers", filed June 8, 1994 by Alexandrovich and others. A positive charging toner utilizing toner of the invention is disclosed in U.S. Patent Application Serial No. 08/253,446, entitled "Two Component Electrophotographic Developers and Preparation Method", filed June 8, 1994 by Jadwin and others.

Dry styrenic/acrylic copolymer toners can optionally incorporate a small quantity of low surface energy material, as described in US-A-4,517,272 and US-A-4,758,491. Optionally the toner can contain a particulate additive on its surface such as the particulate additive disclosed in US-A-5,192,637.

The melt product is pulverized to a volume average particle size of from 5 to 20 micrometers to yield a particulate of the invention. It is generally preferred to first grind the melt product prior to a specific pulverizing operation. The grinding can be carried out by any convenient procedure. For example, the solid composition can be crushed and then ground using, for example, a fluid energy or jet mill, such as described in US-A-4,089,472, and can then be classified in one or more steps. The size of the particles is then further reduced by use of a high shear pulverizing device such as a fluid energy mill.

The particulate produced by the pulverization has a substantially uniform volume average particle size and a polymer composition that differs from the polymer produced by the polymerization step. The molecular weight distribution is shifted. The original peak seen on molecular exclusion chromatography remains present. (The peak may have a slight change in amplitude or a slight shift in concentration.) The gel fraction or the high molecular weight soluble material is diminished and replaced by an intermediate molecular weight peak. In the toner of the invention, this change in molecular weight distribution is accompanied by an improvement in grindability and in fusing characteristics. The term "grindability" is used herein to refer to brittleness and other physical characteristics which effect the work required to physically reduce the size of a toner particle. "Grindability" is commonly expressed in terms of the size of particles obtained by a standardized grinding procedure. If different procedures or different equipment are used, different sizes of particles result; however, rank order of different toners does not ordinarily change.

In this invention, improved grindability of the polymer is believed to be due to increased branching in the polymer backbone. The addition of crosslinking agent initiates a new side chain to the growing polymer chain during polymerization and the presence of chain transfer agent terminates that growth. As a consequence, a branched architecture is obtained and the degree of branching is controlled by varying both the chain transfer agent and the crosslinking agent. The high molecular weight fraction degrades in a uniform manner retaining significant branching. As a result, improvements in grindability are realized without sacrificing the rheological response of the melt. Although the claimed invention is not limited by any theory or explanation, it can be theorized that a network is formed that bears substantially uniform terminated side chains. This is believed to be due to a differential reactivity of the chains extending outward from a divinylbenzene or other crosslinker. This tends to cause one of the chains to be incorporated in the network and the other chain to be terminated by the chain transfer agent after limited growth. The network is degraded during processing into segments of substantially uniform size, apparently bearing a substantially uniform number of short, terminated side chains.

The breakdown of the gel fraction or high molecular weight soluble portion takes place during melt processing in the extruder or two roll mill. The soluble breakdown product has a fairly narrow molecular weight distribution. The position of this gel breakdown product is nearly independent of the amount of gel fraction initially present in the system. The new soluble fraction acts as a compatibilizing agent between the original soluble fraction and any remaining high molecular weight soluble portion or gel fraction. Thus the problem of inhomogeneous melt blends due to large viscosity differences is avoided.

By controlling the amount of initial gel and the amount of breakdown, it is possible to control the entire molecular weight distribution curve for the final toner. The fraction of gel remaining in toner dictates the melt viscosity of the toner while the degree of branching and the molecular weight distribution of the polymer binder following melt processing controls grindability. In a particular embodiment of the invention, this can be utilized in an iterative fashion to quickly develop an optimized toner.

In that embodiment of the method of the invention, a space curve or map of isogel lines is first defined for the polymer used in the toner. The terms "space curve" and "map of isogel lines" are used herein to describe a mathematical relationship capable of representation in three dimensions as a curved surface. That mathematical relationship is used to make a prediction in one of the steps of this method. The space curve and that predictive step are generally described herein in geometric terms. It should be understood, that except for the purposes of a narrower embodiment of the invention, the use of geometric terminology is a matter of convenience. The geometric terminology in the broader embodiments of the invention should be understood to represent equivalent mathematical operations upon the underlying information. Examples of such operations include manipulation of algebraic functions, use of look-up tables, consultation of two or three dimensional graphs, and use of nomograms and other mechanical "calculators". As is apparent from this discussion, the space curve could be defined and utilized using a variety of aids including a digital computer.

The space curve is the relationship between the gel concentration and the concentrations of crosslinker and chain transfer agent used as reactants. The crosslinker and chain transfer agent concentrations are relative to the amount of monomer used as reactant. It is convenient to select as units the weight percentage of the gel relative to the total weight of the toner binder polymer and the weight percentages of crosslinker and chain transfer agent relative to the weight of monomer used as reactant.

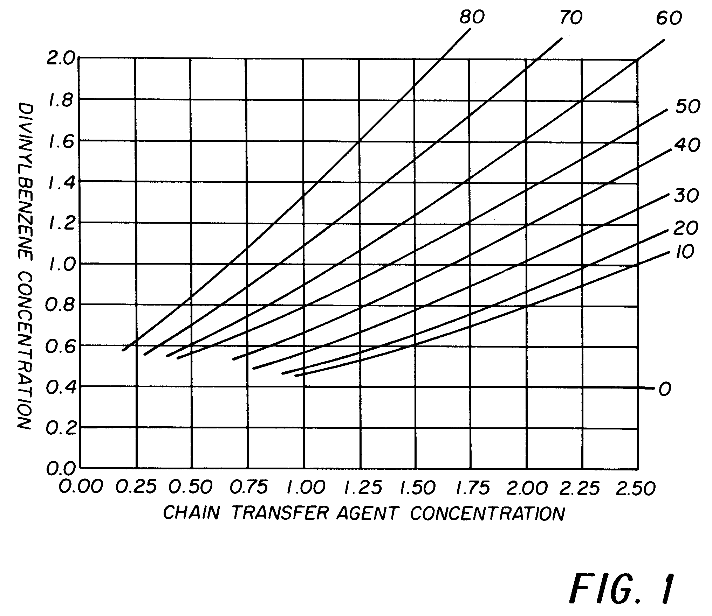

While it is preferred to use a space curve generated from data for the toner of interest, the method can be practiced successfully using the space curve for a different toner. For example, the space curve presented in Fig. 1, which is based upon data from the kind of polymers used in the examples, could be used for another kind of polymer. A space curve is defined by first preparing a series of toners having as ingredients a particular combination of one or more monomers, crosslinkers, and chain transfer agents. The gel concentration of each member of the series of toners is then measured and a space curve is generated. A convenient format for the space curve is illustrated in Fig. 1. Using this format point can be plotted at the appropriate concentration of crosslinker and chain transfer agent for each toner. Each point can then be assigned the gel concentration of the respective toner. Estimated points for uniform gel concentrations can be added as necessary and lines of uniform gel concentration (also referred to herein as "isogel lines") can then be drawn.

The map of isogel lines is used as follows: The user first selects a target fusing temperature range, a target fusing member surface energy range, and a target binder grindability range. Fusing temperature and fusing member surface energy are characteristics of a particular fusing system in an electrophotographic copier or printer. A target for these characteristics can be set by a sophisticated system of scientific analysis or, as simply, as by selecting a particular type of copier or printer. The grindability range is defined as a particular grinding rate in a particular device, for example:

A particulate toner of the invention is then made. The gel concentration of that toner is measured and the difference in grindability between the toner and the target grindability is determined. The melt cohesive strength of the toner at the target fusing temperature range and target fusing member surface energy range is then determined. Numerical values can be obtained by sophisticated analysis or the relative cohesive strength can be evaluated as: too low, acceptable, and too high. In either case, a determine is made as to up, down, or stay the same. On a simple, but very practical level, this analysis can be performed by pressing a spatula holding a toner sample to a series of surfaces of the same material as the target fusing system, heated to a range of temperatures. If the toner does not stick at all, then the temperature is too low. If the toner flows onto the surface completely, the temperature is too high. For many toners, at a temperature approaching the appropriate fusing temperature, the toner will temporarily stick to the surface then release with an audible snap. This procedure can be supplemented by testing in a copier or printer.

A first point is then located on the space curve, that approximates the crosslinker, chain transfer agent and gel concentrations of the crude polymer. A second point is then derived. The second point is displaced from the first point in a direction substantially orthogonal to the isogel lines in a direction of increasing gel fraction if the melt cohesive strength of the toner was classified as too low, and in a direction of decreasing gel fraction if the melt cohesive strength was classified as too high. The second point is displaced from the first point in a direction substantially parallel to the isogel lines in proportion to the difference in grindability. If easier grindability is desired, then the isogel line is followed or paralleled in a direction away from the origin. If more difficult grindability is proposed, then the isogel line is followed or paralleled in the direction of the origin.

A particulate toner is then made using the crosslinker and chain transfer agent concentrations corresponding to the second point. The process is reiterated until a particulate toner is produced that approaches the target characteristics.

The toner of the invention can be used in single component developers (in which carrier particles are not present) or in dual component developers incorporating carrier particles. So far as is now known, the toner particles can be used in all known electrostatographic copying processes. The carrier can be any of a variety of conductive materials; for example: particles of elemental metal or alloy or oxide such as iron, steel, nickel, carborundum, cobalt, oxidized iron and mixtures of such materials. Examples of carriers are disclosed in US-A-3,850,663 and US-A-3,970,571. Especially useful in magnetic brush development procedures are iron particles such as porous iron, particles having oxidized surfaces steel particles, and other "hard" and "soft" ferromagnetic materials such as gamma ferric oxides or ferrites of barium, strontium, lead, magnesium, or aluminum. Such carriers are disclosed in US-A-4,042,518; US-A-4,478,925; and US-A-4,546,060. Carrier particles can be uncoated or can be coated with a thin layer of a film-forming resin to establish the correct triboelectric relationship and charge level with the toner employed. Examples of suitable resins are the polymers described in US-A-3,547,822; US-A-3,632,512; US-A-3,795,618; and US-A-3,898,170 and Belgian Patent No. 797,132. Other useful resins are fluorocarbons such as polytetrafluoro-ethylene, poly(vinylidene fluoride), mixtures of these, and copolymers of vinylidene fluoride and tetrafluoro-ethylene (see, for example, US-A-4,545,060; US-A-4,478,925; US-A-4,076,857; US-A-4,726,994; and US-A-3,970,571). Polymeric fluorocarbon coatings can aid the developer to meet the electrostatic force requirements mentioned above by shifting the carrier particles to a position in the triboelectric series different from that of the uncoated carrier core material to adjust the degree of triboelectric charging of both the carrier and toner particles. The polymeric fluorocarbon coatings can also reduce the frictional characteristics of the carrier particles in order to improve developer flow properties; reduce the surface hardness of the carrier particles to reduce carrier particle breakage and abrasion on the photoconductor and other components; reduce the tendency of toner particles or other materials to undesirably permanently adhere to carrier particles; and alter electrical resistance of the carrier particles.

In a preferred embodiment of the invention, the carrier is sponge iron, which is sieved, oxidized and coated with fluorocarbon on a 0.2 weight percent basis.

In a particular embodiment, the developer of the invention contains from 1 to 20 percent by weight of toner and from 80 to 99 percent by weight of carrier particles. Usually, carrier particles are larger than toner particles. Conventional carrier particles have a particle size of from 5 to 1200 micrometers and are generally from 20 to 200 micrometers.

The developer of the invention can be used in a variety of ways to develop electrostatic charge patterns or latent images. Such developable charge patterns can be prepared by a number of methods and are then carried by a suitable element. The charge pattern can be carried, for example, on a light sensitive photoconductive element or a non-light-sensitive dielectric surface element, such as an insulator coated conductive sheet. One suitable development technique involves cascading developer across the electrostatic charge pattern. Another technique involves applying toner particles from a magnetic brush. This technique involves the use of magnetically attractable carrier cores. After imagewise deposition of the toner particles the image can be fixed, for example, by heating the toner to cause it to fuse to the substrate carrying the toner. If desired, the unfused image can be transferred to a receiver such as a blank sheet of copy paper and then fused to form a permanent image.

The following Examples and Comparative Examples are presented to further illustrate some preferred modes of practice of the method of the invention and to compare the triboelectric properties of inventive carrier particles produced by the inventive method to those properties of similar carrier particles not treated in accordance with the invention.

Unless otherwise indicated, all starting materials were commercially obtained.

### EXAMPLE 1

### Binder synthesis:

An organic phase was prepared by combining (in amounts indicated in Table 1) divinyl benzene, t-dodecanethiol, along with azo-bis pentanenitrile (4 grams), styrene (160 grams), and butyl acrylate (40 grams). An aqueous phase was prepared by combining distilled water (400 grams), potassium dichromate ((0.10 grams), poly(n-methylaminoethanol)adipate (2 grams: as 20 grams of 10 weight/weight percent solution in distilled water), and Ludox™ brand colloidal silica marketed by E.I. du Pont de Nemours (2 grams: as 4 grams of a 50 weight/weight percent dispersion in distilled water).

The organic and aqueous phases were emulsified using a high shear mixing device, a Microfluidizer™ marketed by Microfluidics Corp. of Newton, Massachusetts. The resulting emulsion was placed in a three necked round bottom flask equipped with a mechanical stirrer, condenser, and nitrogen inlet. The flask was placed in a constant temperature bath at 77°C for 16 hours under continuous stirring. The flask was then vented, flushed with argon and heated to 85°C for another three hours. The resulting polymer was filtered, washed, and dried.

### Gel fraction of crude polymer:

The binder and spectra grade tetrahydrofuran were combined in amounts necessary for a 1 percent solution by weight, which was stirred overnight. The resulting solution was then ultracentrifuged at 20,000 rpm for 3 hours and the supernatant was removed from the centrifuge tubes. Approximately 5 grams of supernatant was poured into a weighed aluminum dish and allowed to dry under vacuum at 80°C. The percentage of the binder that was insoluble (the insoluble fraction or gel fraction) was determined by measuring the difference in the amount of dried polymer obtained in the dish and the amount expected from a 1% solution. Results are presented in Table 1.

### Molecular weight distribution:

Size exclusion (gel permeation) chromatography was performed to measure the molecular weight distribution. The same supernatant was used as in the determination of insoluble fraction. Three 20 micrometer Mixed A columns from Polymer Laboratories, Inc., of Amherst, Massachusetts. A calibration curve was determined using polystyrene standards (in tetrahydrofuran) having as molecular weights (in units of thousands) : 0.58; 0.765; 1.49; 1.925; 3.97; 5.45; 9.3; 14.0; 24.2; 46.5; 78.3; 115.0; 170; 260; 400; 570; 940; 1,870; 2,750; 3,800; 4,200; 5,100; 6,300; 7,800; and 12,250.0. Calibration limits were molecular weights of 595 and 18,000,000. Data obtained were truncated below 37 ml elution volume to eliminate the very small molecular weight fractions present in the polymer due primarily to the recombination product of the initiator. Results are presented in Fig. 1.

### Rheology:

Rheological measurements were carried out on the raw polymer binder using a Rheometrics Dynamic Spectrometer Model RDA 700. The frequency range from 0.1 to 100 rad/sec was used for data collection at the temperatures of 100, 150, and 200°C. Binder samples for rheological analysis were prepared by melt compression at 150°C in a circular mold. After the polymer had softened, the melt slabs were heated under 5,000 psi ram pressure for 5 minutes, prior to quenching. Results are reported in Table 1 for the complex viscosity ETA* at 150°C and a frequency of 1 radian per second.

### Grindability:

Grindability was determined by first preparing a "grind test toner" in the form of a "melt slab", then grinding that slab under standardized conditions. The grind test toner was composed of binder polymer (100 parts by weight) with Black Pearls 430™ carbon black, marketed by Cabot Corp., of Boston, Massachusetts (6 parts per hundred parts of toner binder), and 1 part per hundred parts of toner binder of a material marketed as "T-77" by Hodagaya Chemical Co., of New York, New York. T-77 has the structural formula: 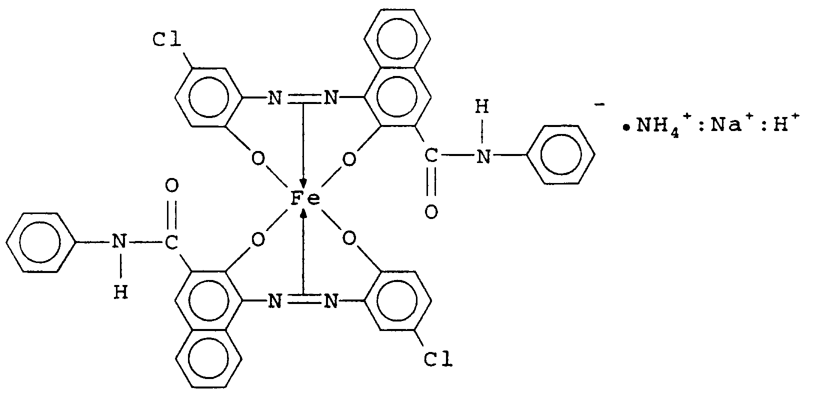
Melts slabs were produced by use of a two roll mill and by use of extruders. The procedure used to produce the melt slab was found to not be critical.

The two roll mill was 4 inch diameter and was used to melt compound the toner formulation at temperatures in the range of 110 to 150°C. A gap of 60 mil was used between the two rollers. The amount of polymer binder was in the range of 25 to 100 grams. Uniform shear conditions were maintained by controlling dam width on the two roll mill. Higher shear conditions were created by lowering the temperature of one of the rollers after all of the toner ingredients had been mixed into the toner melt.

30 millimeter and 92 millimeter extruders were manufactured by Werner and Pfleiderer Corporation of Ramsey, New Jersey; and were twin screw corotating type. The melt temperature was in the range of 120 to 225°C. The feedrate for the 30 millimeter extruder was in the range of approximately 5 to 25 kg/hr. The feedrate for the 92 millimeter extruder was in the range of approximately 200 to 550 kg/hr.

The resulting melt slabs were coarse ground using a Wiley Mill™ apparatus from Thomas-Wiley Co., Philadelphia, Pennsylvania. The coarse ground powder was pulverized in a Trost TX jet mill at a rate of 1 gram per minute at 70 psi of air pressure. The size of the resulting toner powder was measured using a Coulter Multisizer, from Coulter Electronics of Hialeah, Florida. (In all of the Examples and Comparative Examples particle size was between 8 and 15 micrometers volume average diameter.) Results are presented in Table 2.

### Preparation of negative charging toner:

Negative charging toner was prepared as follows. A dry blend was prepared of 50.0 grams of poly(styrene-co-butyl acrylate-co-divinylbenzene) and 3.5 grams of Regal 300™ carbon black, marketed by Cabot Corp., and 1.00 gram of T-77 charge control agent. The dry blend was added to a heated two-roll compounding mill. The roller surfaces were set to 150°C. The melt was exercised on the mill for 20 minutes, then was removed and cooled. The resulting slab was first coarse ground to 2mm size on a laboratory mill, then finely pulverized to approximately 12 micrometer size on a Trost TX jet mill.

### Preparation and evaluation of developer using negative charging toner:

Developer was prepared for the negative toner indicated above, by mixing toner particles prepared as described above at a weight concentration of 10% toner with carrier particles comprising strontium ferrite cores thinly coated (approximately 2 percent by weight) with poly(methyl methacrylate). The volume average particle size of the carrier particles was from about 25 to 35 micrometers.

Toner charge was measured in microcoulombs per gram of toner (mc/g) in a "MECCA" device at the indicated relative humidities. Prior to measuring the toner charge, the developer was vigorously exercised to cause triboelectric charging by placing 4 gram samples of the developer into plastic vials, capping the vials, and placing each vial, for two minutes, on a "bottle-brush" device comprising a magnetic toning roller with a stationary shell and a magnetic core rotating at 2000 rpm. The magnetic core had 12 magnetic poles arranged around its periphery in alternating north-south fashion. After this exercise the developer samples were incubated in open topped vials, at the relative humidities indicated below, for a minimum of 16 hours.

After incubation, the toner charge level, that is, the charge to mass ratio or Q/m, was taken after 2 minutes shaking on a wrist action robot shaker operated at about 2 Hz and an overall amplitude of about 11 cm. Toner Q/m was also taken after shaking the developer for 10 minutes on the wrist action shaker, and also after 2 minutes exercising on the bottle brush. Relative humidities were maintained for these procedures at the same levels as for the respective incubations.

Toner charge level was measured for each sample by placing a 150 milligram sample of the charged developer in a MECCA apparatus and measuring the charge and mass of transferred toner in the MECCA apparatus. This involves placing the 150 milligram sample of the charged developer between electrode plates and subjecting it, simultaneously for 30 seconds, to a 60 Hz magnetic field and an electric field of about 2000 volts/cm between the plates. The toner is released from the carrier and is attracted to and collects on the plate having polarity opposite to the toner charge. The total toner charge is measured by an electrometer connected to the plate, and that value is divided by the weight of the toner on the plate to yield the charge per mass of toner (Q/m).

Throw-off values were determined by taking the 4 gram developer sample that had been bottle-brush exercised for 10 minutes, admixing in 6% more toner to provide a final toner concentration of about 18%), followed by 2 minutes more exercise on the wrist action shaker. This developer was then placed on a roll containing a rotating magnetic core, similar to a magnetic brush roll used for electrostatic development. A Plexiglas housing contained the assembly, and had a vacuum filter funnel mounted directly over the roll. The weight of toner, in milligrams, collected on a piece of filter paper after one minute of running the magnetic core at 2000 revolutions per minute was reported as the throw-off value.

Results indicated that triboelectric properties were not significantly different than those of the same type of toner produced according to Comparative Example A.

### Preparation of positive charging toner:

Positive charging toner was prepared in the same manner as negative charging toner, with the exception that a positive charge control agent, cetyl pyridinium chloride (1 part per hundred parts of binder), was substituted for the T-77.

### Preparation and evaluation of developer using positive charging toner:

Developer was prepared for the positive toner indicated above, by mixing toner particles prepared as described above at a weight concentration of 10% toner with carrier particles comprising strontium ferrite cores thinly coated (approximately 0.5 percent weight/weight) with dehydrofluorinated and oxidized fluorocarbon as disclosed in US-A-4,726,994. The volume average particle size of the carrier particles was from about 105 to 177 micrometers.

A portion of developer consisting of 19.4 grams of carrier and 0.6 grams of toner, was placed in a 4 dram glass vial. The developer was exercised on a wrist-action shaker having a range of motion of 27 cm and an operating frequency of 2.8 hertz. After exercising for 16 hours the toner was stripped from the carrier and fresh toner was added. This procedure was repeated at total elapsed times of 32, 48, and 64 hours of exercising. Charge was then monitored, at various times from 10 seconds to one hour, by the well known Faraday cage method as the developer was shaken.

Conductivity of the developer was determined by placing five grams of the developer in an insulated cell measuring 2.7 cm in diameter and 0.8 cm in height. The cell had a conductive bottom and insulating sides. A brass plate was placed on top of the developer and a magnet was placed on top of the brass plate. A field of 84 volts was applied across the cell. The conductivity of the developer was measured as a resistance in units of log-ohms.

Results indicated that triboelectric properties were not significantly different than those of the same type of toner produced according to Comparative Example A.

The results shown in Table 1 show that the binder polymer of Example 1 has a melt viscosity of 62.5 and a gel fraction of 51 weight percent, both of which are very similar to Comparative Example A (discussed below). Example 1, however, had a particle size of 11.5 micrometers. Under identical pulverizing conditions, Comparative Example A had a particle size of 15.7 micrometers. The smaller particle size obtained at the same grinding conditions reflects greater branching in the polymer of Example 1 and more brittleness. The extent of gel breakdown as a function of shear conditions for Example 1 polymer binder were also similar to those obtained with Comparative Example A. By controlling the extent of branching at same gel portion of the polymer, enhanced grinding was achieved, without sacrificing rheological behavior.

### COMPARATIVE EXAMPLE A

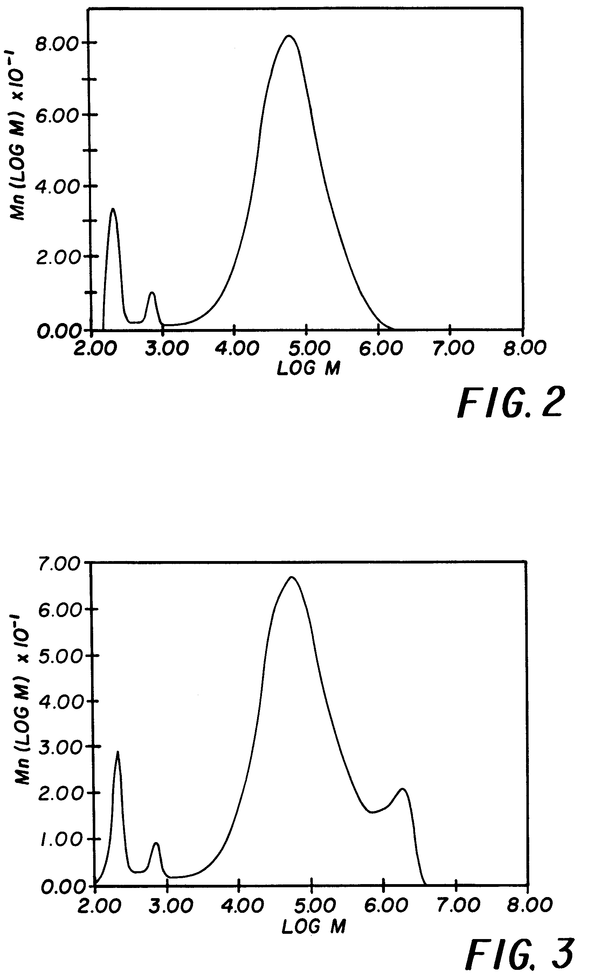

The binder was prepared substantially as described in Example 1 except no chain transfer agent was used and the preparation was scaled up by a factor of 10,000. As indicated in Table 1, the melt viscosity of this toner binder at the specified conditions was 63.6 k-poise and a gel or insoluble content of 51 weight percent. The volume average particle size obtained with this binder at 1 g/min feedrate in the TX mill at 70 psi air pressure was found to be 15.7 microns. The gel permeation chromatograph for the soluble portion of this polymer is shown in Figure 2.

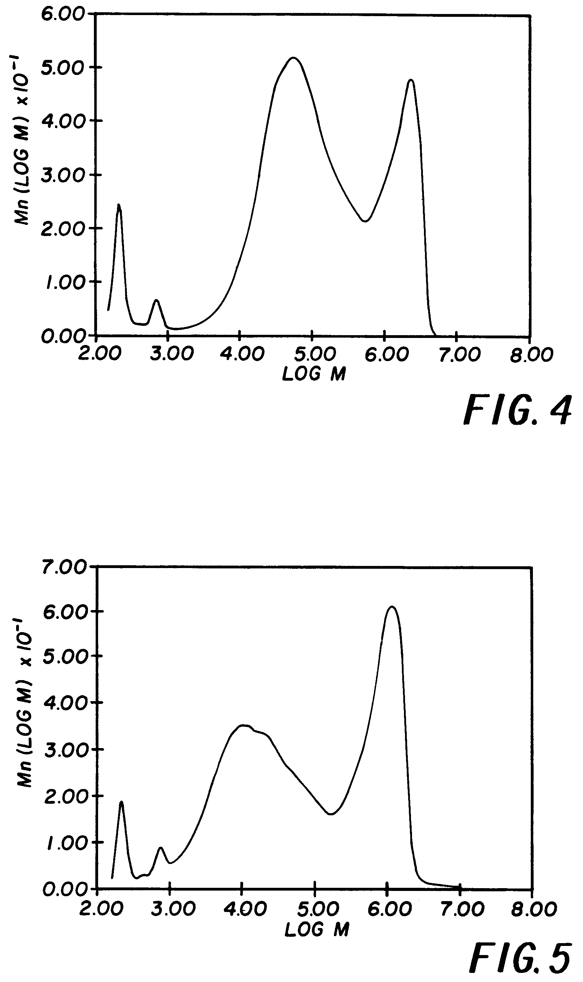

The crude polymer was melt processed by two different procedures. During the melt processing, degradation or breakdown of the gel fraction takes place. The extent of breakdown is controlled by the amount of shear energy applied during melt processing. The polymer was processed at low shear rates (extruded at 325 Kg/hr in a 92 mm twin screw extruder) and at high shear rates (extruded at 120 Kg/hr in a 92 mm twin screw extruder). The resulting gel permeation chromatography (GPC) curves are shown in Figure 3 and 4.

At low shear rates (325 Kg/hr), the extent of gel breakdown was small and the amount of second peak generated was also small (Figure 3). As shown in Figure 4, at higher shear rates (120 Kg/hr) the amount of the second molecular weight peak was increased due to increased breakdown of gel portion. The gel fraction following the low shear conditions was 20 weight percent and following the high shear conditions was 8 weight percent.

### EXAMPLE 2

The binder polymer was prepared substantially as described in Example 1 and Comparative Example A, using the concentrations of crosslinker and chain transfer agent indicated in Table 1. The polymer binder in this example was prepared by starting from the polymer of Example 1 and utilizing the isogel space curve of Figure 1. In order to decrease the grinding rate, a point closer to origin was selected on the same isogel line. The closeness of gel fraction and melt viscosity data in Table 1 for this polymer with Example 1 polymers shows the accuracy of the isogel monogram to predict the rheological behavior. Since the polymer composition selected was more towards the origin (less branching), a decrease in brittleness would be predicted. This indeed was the case, as the toner particle size obtained with this polymer was 12.0 micrometers as compared to 11.5 micrometers for the Example 1 polymer. An increase in the particle size obtained at identical grinding conditions represents a less brittle binder composition.

### EXAMPLE 3

The binder polymer was prepared substantially as described in Example 1 and Comparative Example A, using the concentrations of crosslinker and chain transfer agent indicated in Table 1. The polymer binder in this example was prepared by starting from the polymer of Example 1 and utilizing the isogel space curve of Figure 1. In order to increase the brittleness without significantly altering the rheology, a second point was selected following the same isogel line, but farther from the origin. As shown by the results in Table 1, a more grindable toner binder was obtained, without compromising other toner properties.

### EXAMPLE 4

The binder polymer was prepared substantially as described in Example 1 and Comparative Example A, using the concentrations of crosslinker and chain transfer agent indicated in Table 1. The polymer binder in this example was prepared by starting from the polymer of Example 1 and utilizing the isogel space curve of Figure 1. In order to change rheology, without affecting grindability, the movement along the space curve from the point defined by the polymer of Example 1 to a second point was substantially orthogonal to the isogel lines. The results summarized in Table 1 show that toner particles from this polymer have the same particle size as those of Example 1; however, the melt viscosity obtained with this binder is 140.6 k-poise as compared to 62.5 obtained with Example 1.

### EXAMPLES 5, 6, and 7

In these examples, binder polymer was prepared, on an iterative basis, substantially as described in Example 1 and Comparative Example A, using the concentrations of crosslinker and chain transfer agent indicated in Table 1. Movement along the isogel map of Fig. 1 was directed to maintaining grindability.

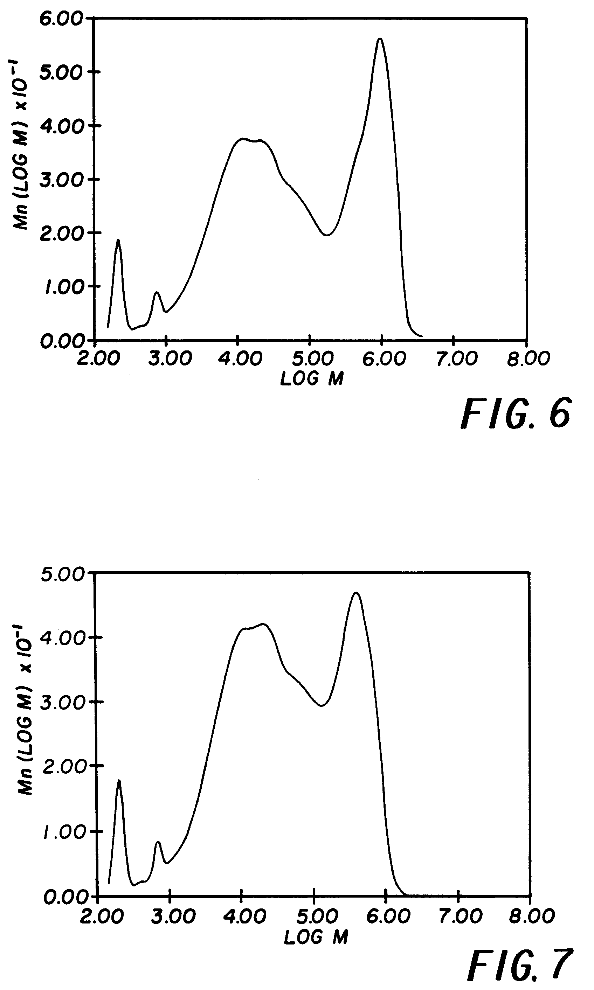

These three samples represent very high grinding due to very high degree of branching. The gel fraction of these polymers were 49, 31 and 15 percent respectively with a corresponding melt viscosities of 67.9, 30.4 and 13.4 k-poise. Despite the differences in the melt viscosities and gel fraction, the breakdown of the gel during melt processing was similar. The GPC curves in Figure 5, 6 and 7 show that the peak associated with the gel breakdown was very narrow and fell in the small range of 1 x 10⁵ to 1 x 10⁶.

### EXAMPLE 8

The binder polymer was prepared substantially as described in Example 1 and Comparative Example A, using the concentrations of crosslinker and chain transfer agent indicated in Table 1. Using the isogel map of Figure 1, a different grindability of the polymer binder was achieved by moving parallel to the isogel lines and the rheological response of the resulting polymer was not affected. Using the isogel line corresponding to the polymer of Example 6, a composition was selected towards the origin to reduce the brittleness without affecting the rheology. The results in Table 1, show that both gel content and melt viscosity of the polymer produced was similar to that of Example 6, but the particle size was 11.2 micrometers, compared to 10.0 micrometers in Example 6.

### EXAMPLES 9-10

The binder polymer was prepared substantially as described in Example 1 and Comparative Example A, using the concentrations of crosslinker and chain transfer agent indicated in Table 1. The particle sizes of 13.4 and 13.1 micrometers were obtained for the toner particulates. These particles size are smaller than that of the particulate of Comparative Example A despite gel fractions of 76 and 63 percent by weight, in Examples 9 and 10, respectively.

### EXAMPLE 11

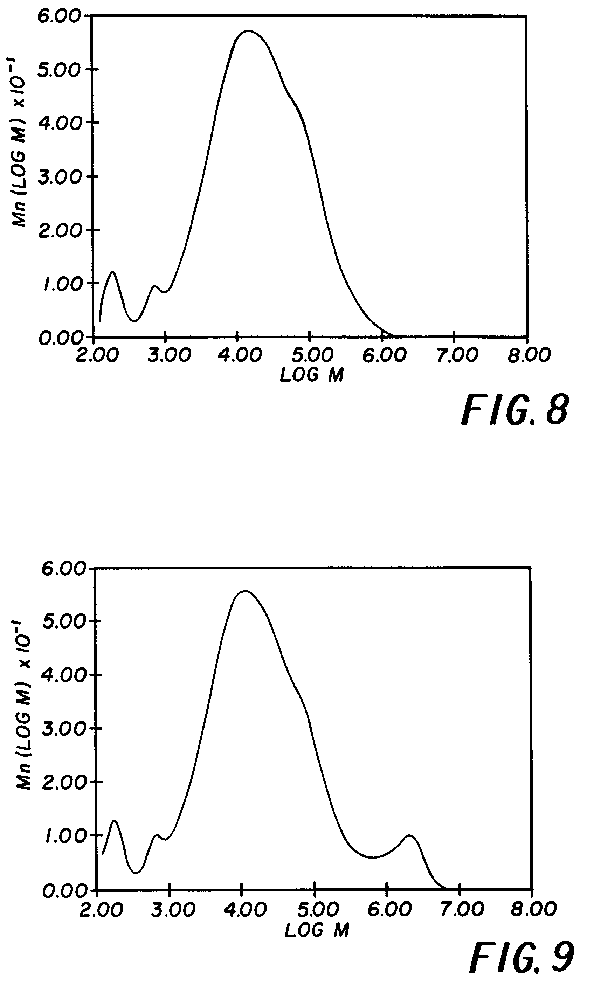

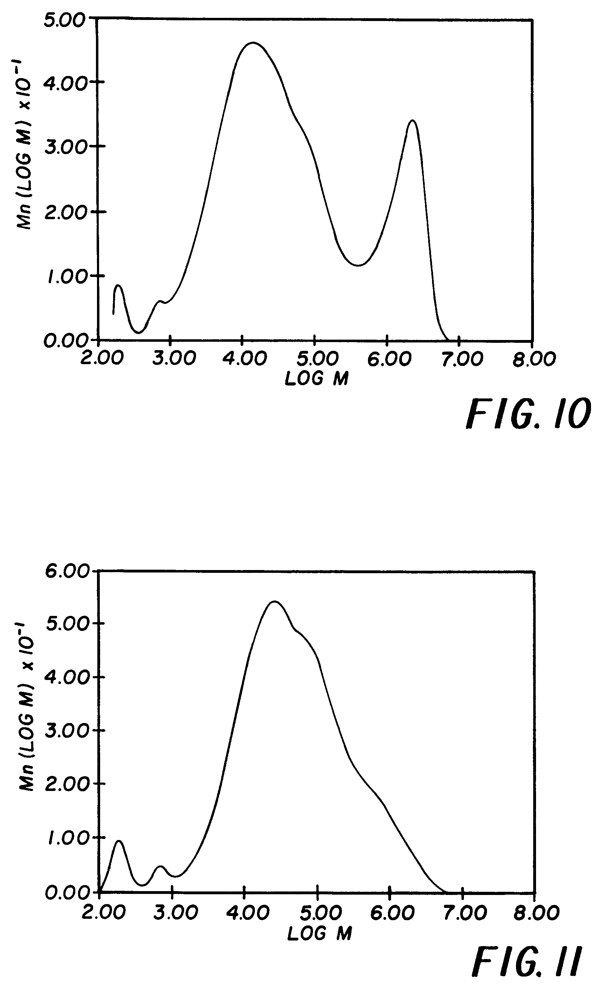

The binder polymer was prepared substantially as described in Example 1 and Comparative Example A, using the concentrations of crosslinker and chain transfer agent indicated in Table 1, except only 2 grams of initiator was used. Melt processing used the same extrusion conditions as Comparative Example A. The change in the initiator concentration did not effect the rheological response, grinding or the gel content of the binder when comparing with Example 5. The breakdown of the gel during melt compounding was also similar. The GPC curves for soluble portion of initial polymer, polymer melt compounded under the low shear conditions and polymer compounded under high shear conditions are shown in Figures 8, 9 and 10. A narrow molecular weight peak corresponding to gel breakdown was evident.

### EXAMPLES 12, 13, 14 AND 15

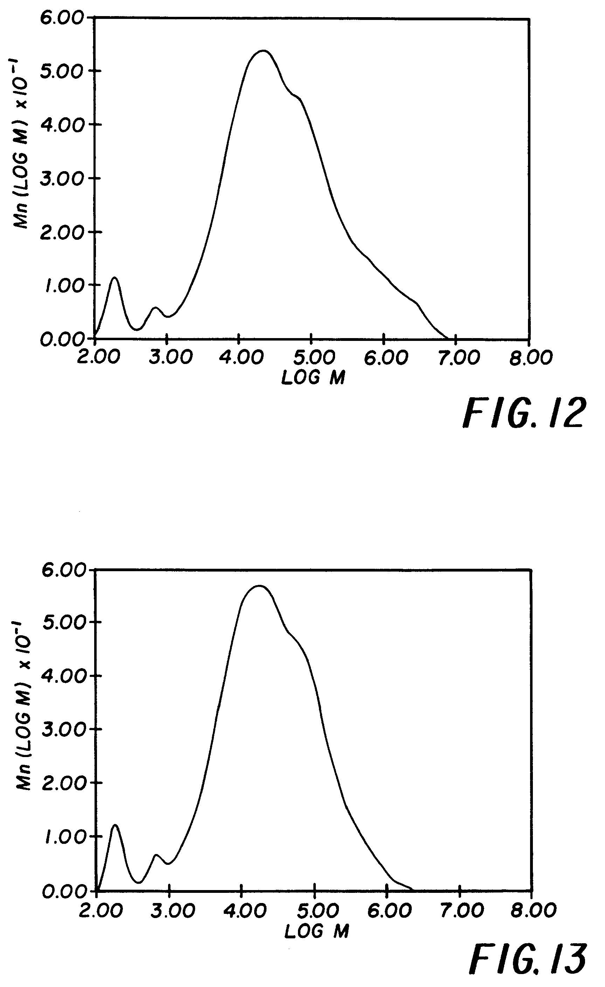

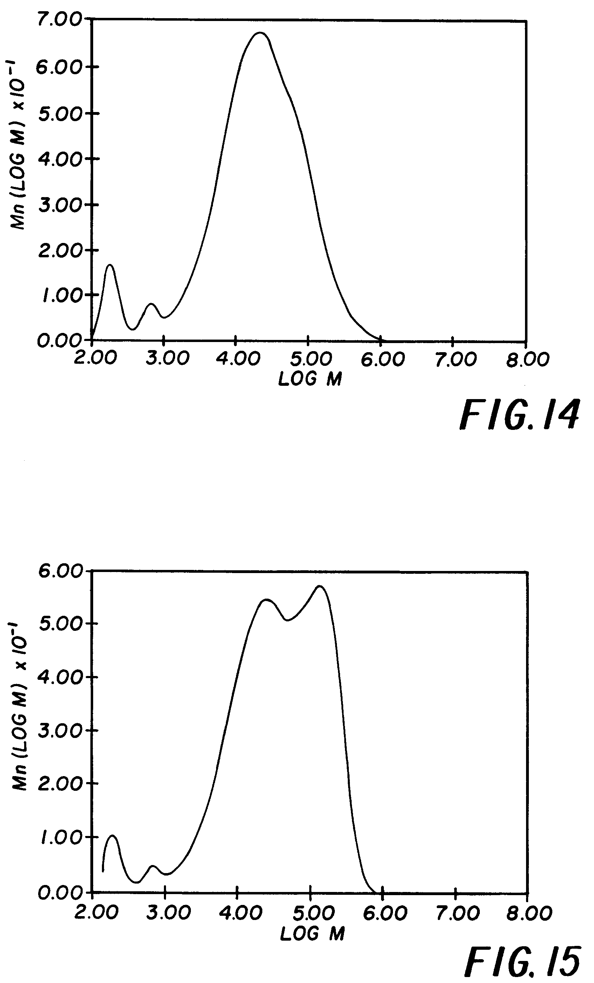

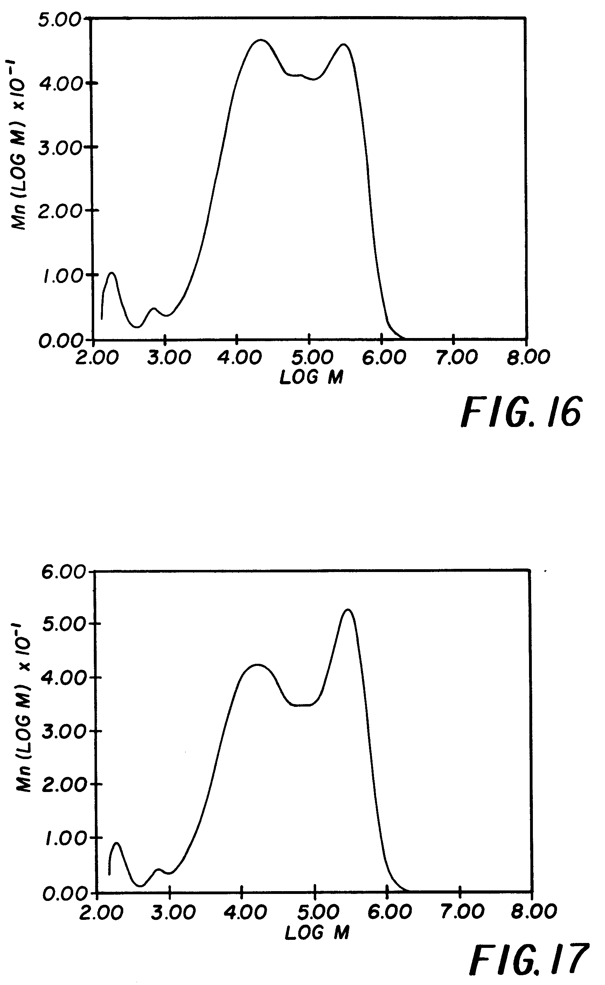

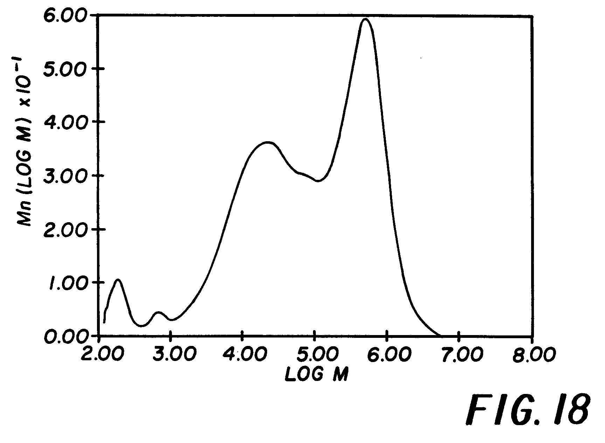

The binder polymer was prepared substantially as described in Example 1 and Comparative Example A, using the concentrations of crosslinker and chain transfer agent indicated in Table 1. The resulting polymer samples had gel portions of 0, 5, 23 and 42 weight percent. Despite this large range of gel contents and a similar large range of rheology reflected in the ETA* values, all of these Examples had similar, good grindabilities. The GPC curves for the soluble portion of the initial polymers are shown in Figures 11, 12, 13 and 14 respectively. The corresponding GPC curves for the soluble fraction of the polymers following identical high shear conditions are presented in Figure 15, 16, 17 and 18. The position of the molecular weight peak due to gel breakdown was somewhat dependent on the gel fraction. The peak moved to higher molecular weight as gel content was increased. In all cases, the breakdown product had a narrow molecular weight in the range of 1 x 10⁵ to 1 x 10⁷.

**TABLE 1**

| Ex or Comp. Ex | divinyl benzene (grams) | t-dodecanethiol (grams) | insol. (wt.%) | vol. dia. (µm) | ETA* (150°C) (kpoise) |
|---|---|---|---|---|---|
| Ex 1 | 1.40 | 1.50 | 51 | 11.5 | 62.5 |
| Ex 2 | 1.20 | 1.00 | 47 | 12.0 | 59.3 |
| Ex 3 | 1.80 | 2.00 | 46 | 10.5 | 63.2 |
| Ex 4 | 1.70 | 1.50 | 57 | 11.5 | 140.6 |
| Ex 5 | 2.60 | 3.80 | 49 | 10.3 | 67.9 |
| Ex 6 | 2.00 | 3.80 | 31 | 10.0 | 30.4 |
| Ex 7 | 1.60 | 3.80 | 15 | 10.0 | 13.4 |
| Ex 8 | 1.60 | 3.00 | 33 | 11.2 | 28.9 |
| Ex 9 | 2.00 | 1.00 | 76 | 13.4 | 221.0 |
| Ex 10 | 1.80 | 1.20 | 63 | 13.1 | 239.0 |
| Ex 11 | 2.60 | 3.80 | 47 | 10.3 | 59.5 |
| Ex 12 | 0.80 | 2.00 | 0 | 11.6 | 12.3 |
| Ex 13 | 1.20 | 2.40 | 5 | 10.6 | 22.0 |
| Ex 14 | 1.60 | 2.80 | 23 | 10.6 | 20.3 |
| Ex 15 | 1.60 | 2.00 | 42 | 11.0 | 39.8 |
| Com Ex A | 0.80 | -- | 51 | 15.7 | 63.6 |

### EXAMPLE 16

This example used an emulsion, rather than a suspension polymerization. An organic phase was prepared by combining divinyl benzene (0.5 grams), t-dodecanethiol (0.25 grams), styrene (37.5 grams), and butyl acrylate (12.5 grams). An aqueous phase was prepared by bubbling dry nitrogen though distilled water (200 grams) for 15 minutes and then adding sodium dodecyl sulfate (1.0 grams), NaS₂O₈ (0.5 grams), and NaHSO₃ (0.25 grams).

After dry nitrogen was bubbled through the organic phase, it was slowly added to the aqueous phase with stirring. The reaction was then allowed to proceed overnight with the temperature maintained at 77°C. The polymer product was then isolated, washed and dried. The gel fraction and ETA*, determined by the procedure described in Example 1, were 18 weight percent and 102.9, respectively. Toner was prepared substantially and evaluated as described in Example 1 and had comparable characteristics to suspension polymerized material having similar chain transfer and crosslinker concentrations.

## Claims

1. A method for making a polymeric particulate, comprising the steps of:
preparing a reaction mixture including vinyl type monomer, crosslinker, and chain transfer agent, said crosslinker having a concentration greater than 0.4 parts by weight per 100 parts by weight of said monomer, said crosslinker and said chain transfer agent having a combined concentration of greater than 0.6 parts by weight per hundred parts of said monomer;
subjecting said reaction mixture to addition polymerization conditions favoring formation of polymer including
(a) a first portion having a molecular weight in excess of 1 x 10⁶, and
(b) a second, tetrahydrofuran soluble portion having a molecular weight distribution determined by molecular exclusion chromatography including a first peak centered in the molecular weight range of from 0.8 x 10⁴ to 1 x 10⁵;
melt processing said polymer to produce a melt product; and
pulverizing said melt product to a volume average particle size of from 5 to 20 micrometers to produce said particulate,
said particulate including polymer having a molecular weight distribution determined by molecular exclusion chromatography having (i) a first peak corresponding in molecular weight to said first peak of said tetrahydrofuran soluble portion and (ii) a second peak in the molecular weight range of from 1 x 10⁵ to 1 x 10⁷.

2. The method of claim 1 further
characterized as comprising:
preparing a reaction mixture including vinyl type monomer, crosslinker, and chain transfer agent, said crosslinker having a concentration greater than 0.4 parts by weight per 100 parts by weight of said monomer, said crosslinker and said chain transfer agent having a combined concentration of greater than 0.6 parts by weight per hundred parts of said monomer;
subjecting said reaction mixture to addition polymerization conditions favoring formation of polymer including
a first portion having a molecular weight in excess of 1 x 10⁶ and
a tetrahydrofuran soluble portion having a molecular weight distribution determined by molecular exclusion chromatography including a first peak centered in the molecular weight range of from 0.8 x 10⁴ to 1 x 10⁵;
melt blending said polymerization product with toner addenda to produce a melt product;
pulverizing said melt product to a volume average particle size of from 5 to 20 micrometers, to produce toner,
said toner including polymer having a molecular weight distribution determined by molecular exclusion chromatography having (i) a first peak corresponding in molecular weight to said first peak of said tetrahydrofuran soluble portion and (ii) a second peak in the molecular weight range of from 1 x 10⁵ to 1 x 10⁷.

3. The method of claim 1 or 2 wherein said first peak in said molecular weight distribution of said tetrahydrofuran soluble portion is the only peak or substantially the only peak in said molecular weight distribution.

4. The method of claim 1, 2, or 3 wherein said first peak in said molecular weight distribution of said tetrahydrofuran soluble portion is substantially the same amplitude as said first peak in said particulate polymer.

5. The method of claim 1,2, 3, or 4 wherein:
said addition polymerization conditions favor formation of polymer including a first portion substantially insoluble in tetrahydrofuran and a second, tetrahydrofuran soluble portion, said tetrahydrofuran soluble portion having a molecular weight distribution determined by molecular exclusion chromatography including a first peak centered in the molecular weight range of from 0.8 x 10⁴ to 1 x 10⁵; and
said melt processing substantially diminishes said insoluble portion and substantially retains said soluble portion and wherein said insoluble portion initially represents at least 10 percent by weight of said polymer.

6. The method of claim 1, 2, 3, 4, or 5 wherein said subjecting step further comprises emulsifying a hydrophobic phase and a hydrophilic phase, said hydrophobic phase including at least one vinyl type monomer, a crosslinker, and a chain transfer agent, said hydrophilic phase including a polymerization initiator.

7. The method of claim 1, 2, 3, 4, 5, or 6 wherein said crosslinker has a concentration of at least 0.6 parts per hundred parts of said monomer and said chain transfer agent has a concentration of at least 0.5 parts per hundred parts of said monomer.

8. The method of claim 1, 2, 3, 4, 5, 6, or 7 wherein
said monomer is selected from the group consisting of styrene, alpha-methylstyrene, para-chlorostyrene, acrylic acid, methyl acrylate, ethyl acrylate, butyl acrylate, dodecyl acrylate, octyl acrylate, phenyl acrylate, methacrylic acid, methyl methacrylate, ethyl methacrylate, butyl methacrylate, octyl methacrylate acrylonitrile, methacrylonitrile, acrylamide, maleic acid, butyl maleate, methyl maleate, dimethyl maleate, vinyl chloride, vinyl acetate, vinyl benzoate, ethylene, propylene, butylene, vinyl methyl ketone, vinyl hexyl ketone, vinyl methyl ether, vinyl ethyl ether, and vinyl isobutyl ether;
said crosslinker is selected from the group consisting of divinyl benzene, divinyl naphthalene, ethylene glycol diacrylate, ethylene glycol dimethacrylate, 1,3-butane diol dimethylacrylate, divinyl aniline, divinyl ether, divinyl sulfide, divinyl sulfone, and compounds having three or more vinyl groups; and
said chain transfer agent is selected from the group consisting of t-dodecanethiol, laurylmercaptan, butylmercaptan, carbon tetrachloride and carbon tetrabromide.

9. The method of claim 1,2, 3, 4, 5, 6, 7, or 8 further characterized as:
providing a map of isogel lines, each said isogel line relating a uniform gel concentration to various concentrations of crosslinker and chain transfer agent in a reaction mixture;
selecting a target fusing temperature range, a target fusing member surface energy range, and a target binder grindability range;
making a particulate, said making further comprising:
preparing a reaction mixture including vinyl type monomer, crosslinker, and chain transfer agent, said crosslinker having a concentration greater than 0.4 parts by weight per 100 parts by weight of said monomer, said crosslinker and said chain transfer agent having a combined concentration of greater than 0.6 parts by weight per hundred parts of said monomer;
subjecting said reaction mixture to addition polymerization conditions favoring formation of polymer including a first portion substantially insoluble in tetrahydrofuran and a second, tetrahydrofuran soluble portion, said soluble portion having a molecular weight distribution determined by molecular exclusion chromatography including a first peak centered in the molecular weight range of from 0.8 x 10⁴ to 1 x 10⁵;
measuring the gel concentration of said polymer;
melt processing said polymer to produce a melt slab; and
pulverizing said melt slab to a volume average particle size of from 5 to 20 micrometers to produce said particulate,
said particulate including polymer having a molecular weight distribution determined by molecular exclusion chromatography substantially retaining said first peak and including a second peak in the molecular weight range of from 1 x 10⁵ to 1 x 10⁷;
determining the difference in grindability between said particulate and said target grindability;
classifying the melt cohesive strength of said particulate at said fusing temperature range and said target fusing member surface energy range, in one of three classes: too low, acceptable, and too high;
locating a first point on said map of isogel lines approximating said crosslinker, chain transfer agent, and gel concentrations of said polymer;
deriving a second point on said map of isogel lines, said second point being displaced from said first point in a direction substantially orthogonal to said isogel lines in a direction of increasing gel fraction if said melt cohesive strength was classified as too low and in a direction of decreasing gel fraction if said melt cohesive strength was classified as too high, said second point being displaced from said first point in a direction substantially parallel to said isogel lines in proportion to said difference in grindability;
repeating said making step with a reaction mixture having crosslinker and chain transfer agent concentrations corresponding to said second point; and
reiterating said measuring, determining, classifying, locating, deriving, and repeating steps.

10. A polymeric particulate prepared by the method of claim 1, 2, 3, 4, 5, 6, 7, 8, or 9.

11. A particulate comprising a styrene-co-butyl acrylate-co-divinyl benzene polymer having branches terminated by chain transfer agent residues; said divinyl benzene having a concentration in said polymer greater than 0.4 parts by weight per 100 parts by weight of the total of said styrene and said butyl acrylate, said divinyl benzene and said chain transfer agent residues having a combined concentration in said polymer of greater than 0.6 parts by weight per hundred parts of the total of said styrene and said butyl acrylate; said polymer having an insoluble portion substantially insoluble in tetrahydrofuran and a tetrahydrofuran soluble portion, said insoluble portion being more than 10 weight percent of said polymer, said soluble portion having a molecular weight distribution determined by molecular exclusion chromatography including a first peak centered in the molecular weight range of from 0.8 x 10⁴ to 1 x 10⁵ and a second peak in the molecular weight range of from 1 x 10⁵ to 1 x 10⁷.

12. The particulate of claim 11 further comprising toner addenda.

13. A developer comprising the particulate of claim 12 and carrier particles.
